(19) Europäisches Patentamt
European Patent Office
Office européen des brevets

(11) EP 2 405 035 A1

(12) EUROPEAN PATENT APPLICATION
published in accordance with Art. 153(4) EPC

(43) Date of publication:
11.01.2012 Bulletin 2012/02

(51) Int Cl.:
C25D 13/10 (2006.01)          C25D 13/00 (2006.01)
C25D 13/18 (2006.01)

(21) Application number: 10748442.0

(22) Date of filing: 17.02.2010

(86) International application number:
PCT/JP2010/000965

(87) International publication number:
WO 2010/100839 (10.09.2010 Gazette 2010/36)

(84) Designated Contracting States:
AT BE BG CH CY CZ DE DK EE ES FI FR GB GR
HR HU IE IS IT LI LT LU LV MC MK MT NL NO PL
PT RO SE SI SK SM TR

(30) Priority: 02.03.2009 JP 2009048474

(71) Applicant: Nihon Parkerizing Co., Ltd.
Tokyo 103-0027 (JP)

(72) Inventors:
• KAWAGOSHI, Ryosuke
  Tokyo 103-0027 (JP)
• YABE, Kosei
  Tokyo 103-0027 (JP)

(74) Representative: HOFFMANN EITLE
Patent- und Rechtsanwälte
Arabellastraße 4
81925 München (DE)

(54) COMPOSITION FOR TREATING SURFACE OF METAL, METHOD FOR TREATING SURFACE OF METAL USING THE COMPOSITION, AND COATING FILM FOR TREATING SURFACE OF METAL UTILIZING THE COMPOSITION AND THE METHOD

(57) [Problems]
To provide a composition for metal surface treatment capable of forming films capable of imparting excellent corrosion resistance in relation to metallic materials, in particular, metal formations having complex shapes through a single dipping step.

[Means for solving]
A composition for metal surface treatment containing 5 to 30% by weight of a nonionic and/or cationic water-based resin, 100 to 1,000 ppm of trivalent Bi ions and an aminopolycarboxylic acid at 0.5 to 10 times in molar concentration based on the Bi ions.

[Fig. 1]

Fig. 1 Electrolysis pattern

**Description**

TECHNICAL FIELD

The present invention relates to a composition for metal surface treatment capable of forming films capable of imparting excellent corrosion resistance in relation to metallic materials, in particular, metal formations having complex shapes through a single dipping step, a process for metal surface treatment using the same and a metal surface treatment film using the same.

BACKGROUND ART

Traditionally, electrodeposition coating having high throwing power has been typically utilized as a procedure for imparting excellent corrosion resistance in relation to various metallic materials, in particular, metal formations having complex shapes. Since desired corrosion resistance may not be obtained solely by electrodeposited films obtained by electrodeposition coating in many cases, however, surface treatment of chemical conversion type, such as zinc phosphate-based chemical conversion treatment has been typically applied in a stage prior to such electrodeposition coating.

Electrodeposition coating can be broadly classified into anionic electrodeposition coating in which films are deposited by anodically electrolyzing objects to be coated in water-based coatings containing an anionic resin emulsion and cationic electrodeposition coating in which films are deposited by cathodically electrolyzing objects to be coated in water-based coatings containing a cationic resin emulsion. For improving corrosion resistance of iron-based materials, the cationic electrodeposition coating, in which basis metals may not elute into coating materials during electrolytic treatment, is advantageous and applied widely for metal formations mainly based on iron-based materials, such as automobile bodies, automobile parts, household electric appliances and building materials.

The cationic electrodeposition coating has a long history in the market and, in the past, rust resistance was secured by incorporating chromium and/or lead compounds. However, sufficient rust resistance could not be obtained thereby and, therefore, surface treatment such as zinc phosphate-based chemical conversion treatment was essential. At present, since chromium and/or lead compounds are substantially prohibited for use due to environmental regulations, in particular, the ELV regulations in Europe, alternative components have been studied and bismuth compounds have been discovered with their effects. Specifically, Patent References to be mentioned below are disclosed.

Patent Reference 1 (Japanese Unexamined Patent Publication No. 5-32919) discloses a resin composition for electrodeposition coating, containing at least one pigment coated with a bismuth compound.

Patent Reference 2 (WO99/31187) discloses a cationic electrodeposition coating composition composed of a water-based dispersion paste formulated with a water-based dispersion in which an organic acid-modified bismuth compound exists in a water-insoluble form.

Patent Reference 3 (Japanese Unexamined Patent Publication No. 2004-137367) discloses a cationic electrodeposition coating material composed of colloidal bismuth metal and a resin composition having sulfonium and propargyl groups.

Patent Reference 4 (Japanese Unexamined Patent Publication No. 2007-197688) discloses an electrodeposition coating material comprising particles of at least one metal compound selected from bismuth hydroxide, zirconium compounds and tungsten compounds, wherein the metal compound is from 1 to 1,000 nm.

Patent Reference 5 (Japanese Unexamined Patent Publication No. 11-80621) discloses a cationic electrodeposition coating composition containing an aqueous solution of bismuth salt of an aliphatic alkoxycarboxylic acid.

Patent Reference 6 (Japanese Unexamined Patent Publication No. 11-80622) discloses a cationic electrodeposition coating composition containing an aqueous solution of a bismuth salt with two or more organic acids, wherein at least one of the organic acids is an aliphatic hydroxycarboxylic acid.

Patent Reference 7 (Japanese Unexamined Patent Publication No. 11-100533) discloses a cationic electrodeposition coating composition, containing bismuth lactate made using lactic acid in which the L form of the optical isomers is contained at 80% or more.

Patent Reference 8 (Japanese Unexamined Patent Publication No. 11-106687) discloses a cationic electrodeposition coating composition, containing an aqueous solution of a bismuth salt with two or more organic acids, wherein at least one of the organic acids is an aliphatic alkoxycarboxylic acid.

These patent references can be broadly classified into Patent References 1 to 4 and Patent References 5 to 8. In other words, Patent References 1 to 4 relate to water-based coatings in which an insoluble bismuth compound or metal bismuth is dispersed, while Patent References 5 to 8 comprise at least dissolving a bismuth compound until no solid content remains, that is, turning it into Bi ions before adding it to the coating materials.

However, the bismuth compounds in these patent references only act in place of chromium and/or lead compounds and, therefore, sufficient corrosion resistance may not be obtained without surface treatment such as zinc phosphate-based chemical conversion treatment. As a matter of fact, these patent references only disclose working examples based on the presupposition that zinc phosphate-based chemical conversion treatment is used in combination.

On the other hand, techniques for further improving corrosion resistance by procedures other than bismuth compounds, capable of securing sufficient corrosion resistance with a single coat without providing surface treatment such as zinc phosphate-based chemical conversion treatment, are now being studied.

For example, Patent Reference 9 (Japanese Unexamined Patent Publication No. 2008-274292) discloses a process for forming a surface treatment film which comprises forming a film over a metal substrate by coating with a film forming agent according to a multistage conduction method having at least two stages, wherein (i) the film forming agent comprises 30 to 20,000 ppm, in total metal amount (by mass), of a zirconium compound and, as necessary, a compound containing at least one metal (a) selected from titanium, cobalt, vanadium, tungsten, molybdenum, copper, zinc, indium, aluminum, bismuth, yttrium, lanthanoid metals, alkali metals and alkali earth metals and 1 to 40% by mass of a resin component, (ii) coating at stage 1 is carried out by conducting a voltage ($V_1$) of 1 to 50 V for 10 to 360 seconds, using the metal substrate as a cathode and then coating at stages 2 and later is carried out by conducting a voltage ($V_2$) of 50 to 400 V for 60 to 600 seconds, using the metal substrate as the cathode, and (iii) the difference between the voltages ($V_2$) and ($V_1$) is at least 10 V.

Also, Patent Reference 10 (Japanese Unexamined Patent Publication No. 2008-538383) discloses a process for forming a multilayered film, which comprises a dipping step of dipping an object to be coated in a water-based coating composition containing (A) a rare earth metal compound, (B) a base resin having a cationic group, and (C) a curing agent, in which the amount of the rare metal compound (A) contained in the water-based coating composition is from 0.05 to 10% by weight in terms of rare metal based on the solid content of the coating composition, a pretreatment step of applying a voltage less than 50 V using the object as a cathode in the water-based coating composition, and an electrodeposition step of applying a voltage of 50 to 450 V using the object as the cathode in the water-based coating composition.

PRIOR ART REFERENCES

PATENT REFERENCES

Patent Reference 1: Japanese Unexamined Patent Publication No. 5-32919
Patent Reference 2: WO99/31187
Patent Reference 3: Japanese Unexamined Patent Publication No. 2004-137367
Patent Reference 4: Japanese Unexamined Patent Publication No. 2007-197688
Patent Reference 5: Japanese Unexamined Patent Publication No. 11-80621
Patent Reference 6: Japanese Unexamined Patent Publication No. 11-80622
Patent Reference 7: Japanese Unexamined Patent Publication No. 11-100533
Patent Reference 8: Japanese Unexamined Patent Publication No. 11-106687
Patent Reference 9: Japanese Unexamined Patent Publication No. 2008-274392
Patent Reference 10: Japanese Unexamined Patent Publication No. 2008-538383

SUMMARY OF THE INVENTION

PROBLEMS TO BE SOLVED BY THE INVENTION

The inventors studied these prior art techniques in a variety of ways and have reached the conclusion that the application of Bi is most effective in order to form films imparting sufficient corrosion resistance over metallic materials without pretreatment such as zinc phosphate-based chemical conversion films. They then decided to restudy the actions and effects of Bi.

The functions as curing catalysts for resins and the corrosion prevention effects for basis metals have traditionally been noticed as actions and effects of Bi. In the prior art, however, while the functions as curing catalysts can be expected, the corrosion prevention effects for metals are extremely insufficient. Considering that maximizing such effects will lead to solving the problems, therefore, the inventors carried out studies.

An assumption was made that although the corrosion prevention effects for basis metals must exist on surfaces where Bi contacts the metals, that is, the interfaces between the basis metal surfaces and the films, Bi components are uniformly dispersed throughout the films so that sufficient Bi to exert corrosion resistance may not exist on the basis metal surfaces, according to the prior art.

As mentioned above, Patent References 1 to 4 disperse insoluble bismuth compounds or metal bismuth into water-based coatings and, when films are deposited from such compositions, Bi will be uniformly dispersed throughout the films in a manner similar to other pigments.

Patent References 5 to 8 comprise dissolving bismuth compounds until no solid content remains, that is, turning it into Bi ions before adding it to coating materials. However, the chelating capability of organic acids as stabilizers for Bi is so weak that Bi will gradually be hydrolyzed, upon introduction into the compositions, to be turned into oxide or hydroxide, and therefore, long-term stabilization as Bi ions may not be expected. Thereby, Bi will also be uniformly dispersed throughout the films. In these Patent References, the fact that zinc phosphate-based chemical conversion treatment is used as surface treatment supports the supposition above.

On the other hand, Patent References 9 and 10 are techniques for depositing inorganic films over basis metals before laminating resin films thereon. Although they are advantageous in terms of corrosion prevention for basis metals, since both the inorganic films and the resin films are deposited through a rise in pH on the basis metal surfaces by cathodic electrolysis, the formation of laminated films will not be easy.

In order to solve the problems of the prior art described above, the inventors have discovered a reaction mechanism in which an aminopolycarboxylic acid having high chelating capability is applied, in order to more stabilize the Bi ions in the composition, to reductively deposit Bi through low-voltage cathodic electrolysis and then, at a stage where diffusion of Bi ions has become insufficient through high-voltage cathodic electrolysis, a resin is deposited by such a rise in pH.

The inventors have then confirmed that films obtained thereby can sufficiently improve not only the catalysis ability for curing a resin which Bi possesses but also the corrosion resistance of the basis metals by virtue of Bi existing at high concentrations on the basis metal surfaces, to successfully accomplish the present invention.
Specifically, the present inventions are (1) to (4) below.

(1) A composition for metal surface treatment (composition for metal surface treatment for depositing an organic and inorganic composite film by electrolysis) containing 5 to 30% by weight of a nonionic and/or cationic resin emulsion, 100 to 1,000 ppm of trivalent Bi ions and an aminopolycarboxylic acid at 0.5 to 10 times in molar concentration based on the Bi ions.

(2) The composition for metal surface treatment according to (1) above, containing 20 to 500 ppm of trivalent Al ions.

(3) A process for metal surface treatment, which comprises dipping a metallic material with a cleaned surface into the composition of (1) or (2) above, then carrying out both an electrolysis step (1) in which, using the metallic material as a cathode, electrolysis is carried out at a voltage of 0 to 15 V for 10 to 120 seconds, and an electrolysis step (2) in which electrolysis is carried out at a voltage of 50 to 300 V for 30 to 300 seconds, wherein the electrolysis step (1) is carried out prior to the electrolysis step (2), and thereafter carrying out rising with water and baking to deposit a film over the metallic material. Here, a "voltage of X to Y (V)" in the electrolysis steps (1) and (2) includes both embodiments wherein a constant voltage is applied within the range of X to Y and wherein an applied voltage is varied with time within the range of X to Y Also, the lower limit value "0 V" of the "voltage of 0 to 15 V" in the electrolysis step (1) refers to a voltage at a certain time in the embodiment wherein an applied voltage is varied with time, instead of the embodiment wherein a constant voltage is applied.

(4) A metal surface treatment film provided by using the composition of (1) or (2) above and according to the process for treatment of the invention (3) wherein metal Bi and oxidized Bi are deposited as Bi at 20 to 250 mg/m$^2$, with a total film thickness being from 5 to 40 $\mu$m and a distribution of Bi deposition being such that B, that is, an amount of deposited Bi from the center of a film thickness to the side of a metallic material is 55% or more based on A, that is, a total amount of deposited Bi (B/A $\geq$ 55%).

BRIEF DESCRIPTION OF THE DRAWINGS

[Fig. 1]

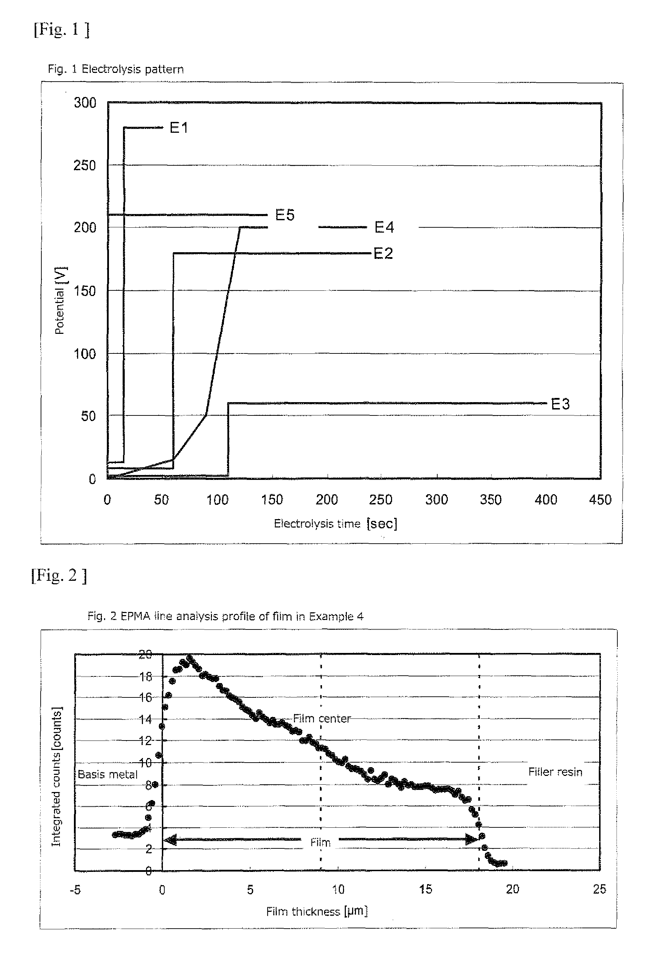

Fig. 1 shows patterns of electrolysis in Examples and Comparative Examples.
[Fig. 2]
Fig. 2 shows an EPMA line analysis profile of a film in Example 3.
[Fig. 3]

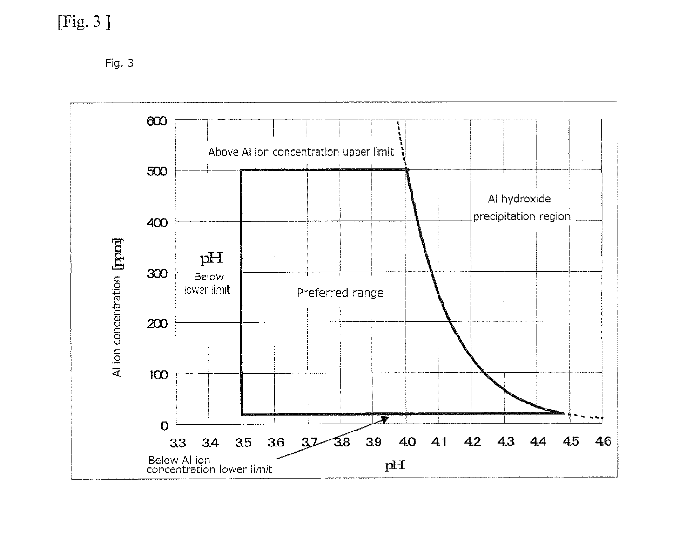

Fig. 3 shows an appropriate range of Al ion concentration and pH.

BEST MODE FOR CARRYING OUT THE INVENTION

A composition for metal surface treatment, a process for metal surface treatment and a metal surface treatment film according to the present invention are used for the purpose of preventing various metals from corroding. Metallic materials are not particularly limited, examples of which may include steel materials such as cold-rolled steel sheets, hot-rolled steel sheets, castings and steel pipes, such steel materials having zinc-based plating and/or aluminum-based plating thereon, aluminum alloy sheets, aluminum-based castings, magnesium alloy sheets and magnesium-based castings. They are especially suitable for use in metal formations having complex shapes, for example, automobile bodies, automobile parts, household electric appliances and building materials as metal formations mainly based on iron-based materials.

The composition for metal surface treatment according to the present invention preferably contains 5 to 30% by weight of a nonionic and/or cationic water-based resin based on the total weight of the composition. A more preferred content is from 7 to 25% by weight and the most preferred content is from 10 to 20% by weight. When the resin content is too low, deposition of films will be insufficient and, when the content is too high, economical disadvantages will arise. Here, nonionic resins or cationic resins are not particularly limited. Examples of manufacture of each resin will be discussed below.

A nonionic resin emulsion can be produced using one or both of self-emulsification, that is, a procedure in which nonionic functional groups such as ethylene oxide groups are introduced into a base resin and forced emulsification, that is, a procedure in which emulsification is made using a nonionic surface active agent. A cationic resin emulsion can be produced using one or both simultaneously of self emulsification, that is, a procedure in which cationic functional groups such as amine groups are introduced into a base resin and forced emulsification, that is, a procedure in which emulsification is made using a cationic surface active agent. Further, after introduction of the cationic functional groups, the nonionic surface active agent can be used as an emulsification assistant. Also, when the molecular weight of a self-emulsified emulsion is low, it will no longer be a particulate emulsion but will be a water-soluble resin. Even though it is a water-soluble resin, however, the effects of the present invention will not be impaired. A water-based resin according to the present invention is a generic designation for water-dispersed emulsions and water-soluble resins.

While any types of base resins can be used without impairing the effects of the present invention, epoxy, urethane and acrylic resins are more preferred.
Also, a water-based resin can optionally be formulated with a curing agent including a blocked polyisocyanate.

The composition for metal surface treatment according to the present invention preferably contains 100 to 1,000 ppm of trivalent Bi ions. A more preferred concentration is from 150 to 800 ppm and the most preferred concentration is from 200 to 600 ppm. When the Bi ion concentration is too low, sufficient deposition of Bi required for improving corrosion resistance may not be obtained and, when the concentration is too high, the electric conductivity of the composition will be too high, which may degrade throwing power of films to metallic materials having complex shapes and, due to the excessive deposition of Bi, may impair the film adhesion properties. The concentration of Bi ions in the composition can be determined by separating the composition into solid and liquid phases using an ultracentrifuge and quantitatively determining the liquid phase by high-frequency inductively coupled plasma atomic emission spectroscopy (ICP) or atomic absorption spectrophotometry (AA).

Bi ions as used here refer to Bi components that are not solidified and are fully dissolved in a composition and, specifically, mean that they compose chelates with an aminopolycarboxylic acid to be described subsequently and are stably water-solubilized.

The composition further contains an aminopolycarboxylic acid. An aminopolycarboxylic acid is a generic designation for chelating agents having an amino group and multiple carboxy groups in the molecule, specific examples of which may include EDTA (ethylenediaminetetraacetic acid), HEDTA (hydroxyethyl-ethylenediaminetriacetic acid), NTA (nitrilotriacetic acid), DTPA (diethylenetriaminepentaacetic acid) and TTHA (triethylenetetraminehexaacetic acid). From the viewpoint of chelate stability with Bi ions, EDTA, HEDTA and NTA are more preferred.

The concentration of an aminopolycarboxylic acid is preferably from 0.5 to 10 times, more preferably from 0.7 to 5.0 times and most preferably from 1.0 to 3.0 times in molar concentration based on the Bi ions. When the concentration ratio based on the Bi ions is too low, the Bi ions will be hydrolyzed in the composition to be oxidized, which reduces effective Bi ion concentrations and, as a result, makes it impossible to obtain a sufficient amount of deposited Bi. Conversely, when the ratio is too high, the Bi ions will be excessively stabilized, which also makes it impossible to obtain a sufficient amount of deposited Bi.

The composition according to the present invention may further be applied with additives typically used in the field of coating materials, such as pigments, catalysts, organic solvents, pigment dispersants and surface active agents, as necessary. Examples of pigments may include color pigments such as titanium white and carbon black, extender pigments such as clay, talc and baryta, anticorrosive pigments such as aluminum tripolyphosphate and zinc phosphate, organic tin compounds such as dibutyltin oxide and dioctyltin oxide and tin compounds such as aliphatic acid or aromatic carboxylic acid salt of dialkyltins such as dibuyltin laurate and dibutyltin dibenzoate.

As a liquid medium for the composition for metal surface treatment according to the present invention, a water-based medium is preferred and water is more preferred. When the liquid medium is water, it may contain other aqueous solvents (for example, water-soluble alcohols) as liquid media.

While the pH of the composition is not particularly limited, it may typically be adjusted in the range of 2.0 to 7.0 and preferably 3.0 to 6.5 for use.

While the temperature of the composition is also not particularly limited, it may be within the range of 15 to 40°C and preferably 20 to 35°C for use in depositing films by electrolytic treatment.

Here, the composition according to the present invention contains a aminopolycarboxylic acid and, when it is combined with a cationic resin in particular, gelling of the cationic resin may occasionally be caused due to the presence of an excessive aminopolycarboxylic acid. In such a case, it is preferred to reduce the amount of cationic groups of the cationic resin or to use a nonionic resin instead (or to combine the cationic resin with a nonionic resin to relatively reduce the total amount of cationic groups). Incidentally, in such a case, another problem may arise in which the resin will not deposit much, despite a rise in pH. Here, the problem can be solved by containment of Al ions. In so doing, 20 to 500 ppm of Al ions are preferably contained. A more preferred concentration is from 50 to 400 ppm and the most preferred concentration is from 100 to 300 ppm. Below the lower limit, the effect of the Al ions of improving film deposition will be insufficient, while above the upper limit, the electric conductivity of the composition will be excessive, which may adversely degrade throwing power.

Here, the mechanism of action of the Al ions mentioned above is as described below. Namely, it is estimated that ionized Al turns into fine hydroxide colloid due to a rise in pH on the metal surface through cathodic electrolysis, which, upon completely losing the zeta charge at a pH around 9 to rapidly start flocculating, will deposit while incorporating the surrounding resin.

The series of reactions from the Al ions to the hydroxide colloid losing the charge due to the cathodic electrolysis need to complete instantaneously. If the Al component is hydroxidized in advance, flocculation will start with time, extremely reducing the flocculation capability at a pH around 9. Therefore, the Al component in this embodiment must insistently exist as ions in the composition.

Also, while metal ions are usually stabilized by the presence of a chelating agent, for Al ions, few, if any, chelating agents providing stability such that generation of hydroxide colloid due to a rise in pH may be prevented are available. At least, organic acids, such as acetic acid, formic acid, sulfamic acid and lactic acid and aminopolycarboxylic acids that are usually formulated into electrodeposition coating compositions do not possess such chelating capability as to stabilize Al ions.

Al ions can be added using Al compounds. Al compounds are not particularly limited and can be added in the form of inorganic acid salts such as nitrate and sulfate or organic acid salts such as lactate and acetate.

In addition to containing Al ions in the range mentioned above, the pH of the composition according to this embodiment preferably satisfies the mathematical formula:

$$3.5 \leq pH \leq -Log\,((A \times 1.93 \times 10^{-15})^{1/3})$$

wherein A represents an Al ion concentration in ppm.
More preferably, it satisfies the mathematical formula:

$$3.6 \leq pH \leq -Log\,((A \times 1.93 \times 10^{-15})^{1/3}).$$

Most preferably, it satisfies the mathematical formula:

$$3.7 \leq pH \leq -Log\,((A \times 1.93 \times 10^{-15})^{1/3}).$$

When the pH is below the lower limit, deposition efficiency and throwing power will deteriorate. When the pH is above the upper limit, Al ions will unfavorably undergo hydrolysis.

The term $-Log\,((A \times 1.93 \times 10^{-15})^{1/3})$ is given by the solubility product of Al hydroxide at 25°C of $1.92 \times 10^{-32}$. Namely, at this pH or higher, Al ions will precipitate and deposit as hydroxide, no longer remaining as ions. Here, 25°C is a typical temperature during storage and use of the composition.

Also, in addition to Bi ions and Al ions, the composition according to the present invention may contain metal ions such as Fe ions, Zn ions and Ce ions, without impairing the effects of the present invention. Rather, these metal ions possess the effect of promoting deposition of water-based resins, although not as effective as Al ions. Trivalent Fe ions are more preferred than bivalent Fe ions.

For reference, an appropriate range of Al ion concentration and pH is shown in Fig. 3.

After dipping a metallic material into the composition according to the present invention, in order to form a film over the surface of the metallic material, cathodic electrolysis using the metallic material as a cathode must be carried out. The cathodic electrolysis comprises two electrolysis steps: (1) in which electrolysis is carried out at a voltage of 0 to 15 V for 10 to 120 seconds, and (2) in which electrolysis is carried out at a voltage of 50 to 300 V for 30 to 300 seconds, wherein the electrolysis step (1) needs to be carried out prior to the electrolysis step (2).

The electrolysis step (1) is a step carried out for preferentially depositing Bi and the electrolysis step (2) is a step carried out for preferentially depositing a resin. In order to obtain sufficient corrosion resistance, the presence of Bi in direct contact with the metallic material, that is, the presence of the interfacial Bi at the interface between the metallic material and the film is required, for which the order and conditions of the electrolysis steps (1) and (2) are extremely important.

The voltage for the electrolysis step (1) is from 0 to 15 V and the electrolysis is preferably carried out for 10 to 120 seconds. When the voltage is below the lower limit, in other words, when the electrolysis is carried out using the metallic material as an anode, the metallic material will elute into the composition, not only degrading the stability of the composition but also preventing the interfacial Bi required for improving corrosion resistance from sufficiently depositing. Above the upper limit, the resin will start depositing before Bi preferentially deposits on the metal surface, also preventing sufficient corrosion resistance from being obtained.

When the treatment time is less than the lower limit, sufficient interfacial Bi will not deposit and, when the treatment time is more than the upper limit, the amount of deposited interfacial Bi will be excessive, possibly impairing the film adhesion properties.

The voltage for the electrolysis step (2) is from 50 to 300 V and the electrolysis is preferably carried out for 30 to 300 seconds. When the voltage is below the lower limit, the amount of a deposited resin film will be insufficient and, when the voltage is above the upper limit, economical disadvantages will arise due to the excessive deposition of the resin film and also the appearance of the finished film may be impaired.

In transition from the electrolysis step (1) to the electrolysis step (2), the voltage needs not to be increased instantaneously but, instead, may be increased gradually without impairing the effects of the present invention.

Bi present in the film obtained using the composition according to the present invention and according to the process for treatment according to the present invention exists in the form of metal and oxide. Bi deposited by cathodic electrolysis is basically reductively deposited metal Bi, part of which is oxidized into oxide especially in the baking step of the film. Also when a high voltage is applied in the electrolysis step (2), stabilization of Bi by an aminopolycarboxylic acid will be insufficient due to a rise in pH on the film surface so that Bi may also be deposited as Bi oxide especially on the surface side of the film.

The amount of deposited Bi is preferably from 20 to 250 mg/m$^2$, more preferably from 30 to 200 mg/m$^2$ and most preferably from 50 to 150 mg/m$^2$. When the amount of deposited Bi is too small, sufficient corrosion resistance may not be obtained and, when the amount is too great, improvement in corrosion resistance may no longer be expected and the film adhesion properties may also be impaired. The amount of deposited Bi can be quantitatively determined according to X-ray fluorescence spectrometry. The "amount of deposited metal Bi" and the "amount of deposited Bi oxide" in CLAIMS and SPECIFICATION refer to values quantitatively determined according to X-ray fluorescence spectrometry. When quantitatively determined as "metal Bi" or "Bi oxide", the value shall be the "amount of deposited metal Bi" or the "amount of deposited Bi oxide", even though the presence of hydroxide as another form may not be negated.

The total thickness of a film obtained is preferably from 3 to 40 $\mu$m, more preferably from 5 to 30 $\mu$m and most preferably from 7 to 25 $\mu$m. When the thickness is too small, sufficient corrosion resistance may not be obtained and, when the thickness is too great, not only economical disadvantages will arise but also throwing power may deteriorate. Film thicknesses can be measured by an electromagnetic induction type film thickness gauge when the basis metal is magnetic and by an eddy current type film thickness gauge when the basis metal is nonmagnetic.

Bi in a film needs to exist more on the basis metal side than on the film surface. Specifically, a distribution of deposited Bi is preferably such that B, that is, an amount of deposited Bi from the center of a film thickness to the side of a metallic material is 55% or more based on A, that is, a total amount of deposited Bi (B/A $\geq$ 55%). A more preferred distribution is 58% or more and the most preferred distribution is 60% or more. When the distribution is too low, sufficient corrosion resistance may not be obtained. A distribution above 90% is not preferred because the Bi concentration of the film surface side will be extremely low, so that the function of Bi as a curing catalyst may be lost.

The distribution of deposited Bi in a film can be determined by analyzing the line of the cross section of the film using EMPA. The positions of the interface between the basis metal and the film and of the film surface can be identified by simultaneously photographed reflection electron images, so that A, that is, the integration value of Bi strength in the film by EPMA line analysis and B, that is, the integration value of that only from the center of a film thickness to the side of a metallic material may be given to calculate B/A.

EXAMPLES

Embodiments of the present invention will be specifically described below, with reference to Examples and Comparative Examples.

Resin Emulsions

As two resin emulsions, "Lugalvan EDC", a cationic epoxy resin made by BASF (non-volatile matter 34%, hereinafter abbreviated as "R1") and "VONDIC 2220", a nonionic urethane resin made by DIC Corporation (non-volatile matter 40%, hereinafter abbreviated as "R2") were used.

Pigment-dispersed Paste

To 1,010 parts of "jER828EL", an epoxy resin made by Japan Epoxy Resins Co., Ltd., 390 parts of bisphenol A, "PLACCEL 212", polycaprolactonediol made by Daicel Chemical Industries, Ltd. and 0.2 part of dimethyl benzylamine were added and reaction was allowed at 130°C until the epoxy equivalent reaches approximately 1,090.
Next, 134 parts of dimethyl ethanolamine and 150 parts of lactic acid (approximately 90%) were added and reaction was allowed at 120°C for four hours. Next, methyl isobutyl ketone was added to adjust the solid content to obtain a resin for pigment dispersion with 60% by weight of non-volatile matter.
To 8.3 parts of the resin for pigment dispersion obtained above, 15 parts of titanium oxide, 7.0 parts of refined clay, 0.3 part of carbon black, 1.0 part of dioctyltin oxide, 3.0 parts of zinc phosphate and 18 parts of deionized water were added and dispersion was carried out in a ball mill for 20 hours to obtain a pigment-dispersed paste with 50% by weight of inorganic solid content, which were added to each of the compositions of Examples and Comparative Examples to be 5.0% by weight of inorganic solid content.

Bi Additives

Bi compounds and aminopolycarboxylic acids were mixed to produce various Bi additives with a Bi ion concentration of 10,000 ppm.
Bi Additive 1 (hereinafter abbreviated as "B1")
8.38 g of EDTA was dissolved in 500 g of distilled water and the mixture was warmed to 60°C. The, 23.21 g of bismuth nitrate pentahydrate was added and stirring was carried out until the solid content was fully dissolved. Thereafter, additional distilled water was added so that the total amount finally reached 1.0 L to produce "B1". In this case, EDTA is 0.6 time in molar concentration based on Bi.

Bi Additive 2 (hereinafter abbreviated as "B2")

13.30 g of HEDTA was dissolved in 500 g of distilled water and the mixture was warmed to 60°C. Then, 11.15 g of bismuth oxide was added and stirring was carried out until the solid content was fully dissolved. Additional distilled water was added so that the total amount finally reached 1.0 L to produce "B2". In this case, HEDTA is 1.0 time in molar concentration based on Bi.

Bi Additive 3 (hereinafter abbreviated as "B3")

39.90 g of HEDTA was dissolved in 500 g of distilled water and the mixture was warmed to 60°C. Then, 11.15 g of bismuth oxide was added and stirring was carried out until the solid content was fully dissolved. Additional distilled water was added so that the total amount finally reached 1.0 L to produce "B3". In this case, HEDTA is 3.0 times in molar concentration based on Bi.

Bi Additive 4 (hereinafter abbreviated as "B4")

73.12 g of NTA was dissolved in 500 g of distilled water and the mixture was warmed to 60°C. Then, 11.15 g of bismuth oxide was added and stirring was carried out until the solid content was fully dissolved. Additional distilled water was added so that the total amount finally reached 1.0 L to produce "B4". In this case, NTA is 8.0 times in molar concentration based on Bi.

Production of Compositions

The pigment-dispersed paste, whose amount is 5.0% by weight of inorganic solid content, was formulated with the resin emulsions and the Bi additives in the combinations shown in Table 1 to produce compositions. The concentration of each was diluted and adjusted with deionized water. Also, as necessary, the pH of each composition was adjusted with nitric acid or ammonia.

Electrolysis Conditions

SUS 304 was used for an anode electrode as a counter electrode and a predetermined potential was applied using a rectifier, with a polar ratio between the anode and the cathode of 1.0. For cathodic electrolysis treatment, the temperature of each composition was maintained at 30˚C using a heat exchanger and stirring was carried out using an impeller. Detailed electrolysis conditions of each are shown below. Also, the electrolysis pattern of each is illustrated in Fig. 1.

Electrolysis Condition 1 (hereinafter abbreviated as "E1")

As the electrolysis step (1), electrolysis was carried out at 13 V for 15 seconds and immediately thereafter, as the electrolysis step (2), electrolytic treatment was carried out at 280 V for 45 seconds.

Electrolysis Condition 2 (hereinafter abbreviated as "E2")

As the electrolysis step (1), electrolysis was carried out at 8 V for 60 seconds and immediately thereafter, as the electrolysis step (2), electrolytic treatment was carried out at 180 V for 180 seconds.

Electrolysis Condition 3 (hereinafter abbreviated as "E3")

As the electrolysis step (1), electrolysis was carried out at 2 V for 110 seconds and immediately thereafter, as the electrolysis step (2), electrolytic treatment was carried out at 60 V for 290 seconds.

Electrolysis Condition 4 (hereinafter abbreviated as "E4")

As the electrolysis step (1), the voltage was increased from 0 V to 15 V in the course of 60 seconds and further increased to 50V in the course of 30 seconds and, as the electrolysis step (2), the voltage was increased to 200 V in the course of 30 seconds and held at 200 V for 120 seconds. Consequently, in Claim 4, the electrolysis step (1) is for 60 seconds and the electrolysis step (2) is for 150 seconds.

Electrolysis Condition 5 (hereinafter abbreviated as "E5")

As the electrolysis step (1), electrolytic treatment was carried out at 210 V for 160 seconds and no electrolysis step (2) was carried out.

Production of Test Sheets

Cold-rolled steel sheets SPCC (JIS 3141) 70 $\times$ 150 $\times$ 0.8 mm (hereinafter abbreviated as SPC), as test sheets, were degreased in advance by spraying the surfaces for 120 seconds with "FC-E 2001", a strongly alkaline degreasing agent made by Nihon Parkerizing Co., Ltd. After degreasing, the sheets were spray-rinsed with water for 30 seconds and dipped into the compositions shown in Examples and Comparative Examples to carry out cathodic electrolytic treatment under the electrolysis conditions shown in Examples and Comparative Examples. The test sheets after electrolysis were immediately spray-rinsed with deionized water for 30 seconds and baked in an electric oven at 180˚C for 20 minutes.

Investigation of Film Characteristics

Film characteristics of the films deposited on the test sheets were investigated according to the methods described below.
Film thickness: measured using an electromagnetic induction type film thickness gauge.
Amount of deposited Bi: quantitatively determined according to X-ray fluorescence spectrometry.
Distribution of deposited Bi: analyzed by EMPA line analysis of the cross section of specimens. For specific procedures, refer to the description below.
The distribution of deposited Bi in the film was analyzed using EMPA. The metallic materials after film coating treatment were fixed by a potting resin and polished on the cross sections to obtain the line analysis profiles of Bi along the direction from the basis metal to the deposited film surface. The line analysis profile is a calculated average value of characteristic X-ray strength at an optional width along a one-dimensional direction of an analysis area based on mapping analysis data and may be interpreted as line analysis having width. Conditions for measurement are as follows.

Instrument: EPMA-1610 type made by Shimadzu Corporation.
Electron gun: Ce B6 cathode type
Beam current: 50 nA
Beam voltage: 15 kV
Beam diameter: 1 $\mu$m or smaller
Number of integration: one
Sampling time per point: 100 ms
Dispersive crystal: PET (Bi M$\alpha$)

The positions of the interface between the basis metal and the film and of the film surface were identified by simultaneously photographed reflection electron images so that A, that is, the integration value of Bi strength in the film and B, that is, the integration value of that only from the center of a film thickness to the side of a metallic material was given to calculate B/A.

For reference, the result of analysis on the film obtained in Example 4 as a representative profile is illustrated in Fig. 2.

Method for Testing Corrosion Resistance and. Method for Evaluation

Crosscutting was made on the electrodeposition coated sheets and then salt spray testing (JIS-Z 2371) was carried out to measure the maximum blister width to one side of the crosscut portions after 1,000 hours. The results of the measurement were evaluated according to •: 3 mm or less, •: less than 2 mm, ○: 2 mm or more but less than 3 mm, △: 3 mm or more but less than 4 mm and ✕: 4 mm or more. The results are shown in Table 1.

From Examples 1 to 6 on Table 1, it is appreciated that the films according to the present invention capable of securing sufficient corrosion resistance in relation to metallic materials were obtained by using the composition according to the present invention and applying the process for treatment according to the present invention.

On the contrary, while Comparative Example 1 is on a level with Example 1 except Bi ions and Zn ions were excessively added, the total concentration of metal ions in the composition was excessive so that the amount of deposited Bi was excessive. Also, sufficient film thickness was not obtained and corrosion resistance was not sufficient.

While Comparative Examples 2 is on a level in which the Bi ion concentration of Example 4 was reduced and the conditions for electrolysis were altered, a sufficient amount of deposited Bi was not obtained and, due to insufficient Bi coverage (insufficient B/A) over the basis metal surface, sufficient corrosion resistance was not obtained.

Also, in Comparative Example 3 in which either Bi or aminopolycarboxylic acid was not added, effects of Bi were not obtained at all, with insufficient corrosion resistance.

Further, for Comparative Examples 4 in which the resin concentration of Example 6 was reduced and no additive metals were added, in addition to insufficient resin concentration, effects of additive metals as film deposition improvers were not obtained, with no films deposited at all.

As described above, it was confirmed that the deposition of films capable of imparting sufficient corrosion resistance in relation to metallic materials, that is, films having a sufficient and effective amount of deposited Bi and a distribution of deposited Bi was enabled by cathodic electrolysis under appropriate electrolysis conditions using aqueous solutions of resin emulsions formulated with Bi ions and aminopolycarboxylic acids characteristic of the present invention.

Table 1 Examples and Comparative Examples

| Examples and Comparative Examples | Resin emulsions | | | Bi materials | | | | | Al ion concentrations [ppm] | pH | Formula value* | Electrolysis conditions | | | | | | Film characteristics | | | Corrosion resistance |
|---|---|---|---|---|---|---|---|---|---|---|---|---|---|---|---|---|---|---|---|---|---|
| | | | | | | Aminopolycarboxylic acids | | | | | | | Step (1) | | Step (2) | | | | | | |
| | Abbrevi-ations | Ionicities | Concentrations [wt%] | Abbrevi-ations | Bi concentra-tions [ppm] | Types | Times in molar concentration based on Bi | | | | | Abbrevi-ations | Voltages [V] | Times (second) | Voltages [V] | Times (second) | Film thicknesses [μm] | Amounts of deposited Bi [mg/m2] | B/A | SST |
| Example 1 | R1 | Cation | 20% | B4 | 200 | NTA | 8.0 | | 200 | 4.1 | 4.14 | E2 | 8 | 60 | 180 | 180 | 20 | 78 | 62% | ● |
| Example 2 | R1 | Cation | 7% | B1 | 800 | EDTA | 0.6 | | 100 | 4.2 | 4.24 | E3 | 2 | 110 | 60 | 290 | 12 | 235 | 60% | ● |
| Example 3 | R1 | Cation | 7% | B1 | 800 | EDTA | 0.6 | | -- | 6.5 | - | E3 | 2 | 110 | 60 | 290 | 8 | 195 | 59% | ○ |
| Example 4 | R1 | Cation | 15% | B2 | 300 | HEDTA | 1.0 | | 50 | 4.2 | 4.34 | E4 | 0→15 | 60 | 50→200 | 150 | 18 | 85 | 65% | ● |
| Example 5 | R1 | Cation | 15% | B2 | 300 | HEDTA | 1.0 | | -- | 6.4 | - | E4 | 0→15 | 60 | 50→200 | 150 | 13 | 54 | 61% | ○ |
| Example 6 | R1 | Cation | 18% | B3 | 300 | HEDTA | 3.0 | | 100 | 4.0 | 4.24 | E2 | 8 | 60 | 180 | 180 | 19 | 96 | 63% | ● |
| Example 7 | R1 | Cation | 18% | B3 | 300 | HEDTA | 3.0 | | -- | 6.5 | -- | E2 | 8 | 60 | 180 | 180 | 14 | 51 | 58% | ○ |
| Example 8 | R1 | Cation | 27% | B2 | 120 | HEDTA | 1.0 | | 20 | 3.6 | 4.47 | E1 | 13 | 15 | 280 | 35 | 25 | 26 | 57% | ○ |
| Example 9 | R2 | Nonion | 18% | B2 | 300 | HEDTA | 1.0 | | 450 | 4.0 | 4.02 | E2 | 8 | 60 | 180 | 180 | 35 | 112 | 71% | △ |
| Comparative Example 1 | R1 | Cation | 20% | B4 | 1100 | NTA | 8.0 | | 600 | 3.8 | 3.98 | E2 | 8 | 60 | 180 | 180 | 3 | 267 | 62% | × |
| Comparative Example 2 | R1 | Cation | 18% | B3 | 70 | HEDTA | 3.0 | | 200 | 4.0 | 4.14 | E5 | 210 | 180 | -- | -- | 20 | 16 | 52% | × |
| Comparative Example 3 | R1 | Cation | 18% | | | Not added | | | 200 | 4.0 | 4.14 | E2 | 8 | 60 | 180 | 180 | 19 | 0 | -- | × |
| Comparative Example 4 | R2 | Nonion | 4% | B2 | 300 | HEDTA | 1.0 | | - | 4.0 | -- | E2 | 8 | 60 | 180 | 180 | No films deposited | | | |

*Formula value = Log $(A \times 1.93 \times 10^{-15})^{1/3}$

[Table 1]

EP 2 405 035 A1

11

**Claims**

1.  A composition for metal surface treatment containing 5 to 30% by weight of a nonionic and/or cationic water-based resin, 100 to 1,000 ppm of trivalent Bi ions and an aminopolycarboxylic acid at 0.5 to 10 times in molar concentration based on the Bi ions.

2.  The composition for metal surface treatment according to Claim 1, containing 20 to 500 ppm of trivalent A1 ions.

3.  A process for metal surface treatment, which comprises dipping a metallic material with a cleaned surface into the composition of Claim 1 or 2, then carrying out both an electrolysis step (1) in which, using the metallic material as a cathode, electrolysis is carried out at a voltage of 0 to 15 V for 10 to 120 seconds, and an electrolysis step (2) in which electrolysis is carried out at a voltage of 50 to 300 V for 30 to 300 seconds, wherein the electrolysis step (1) is carried out prior to the electrolysis step (2), and thereafter carrying out rising with water and baking to deposit a film over the metallic material.

4.  A metal surface treatment film provided by using the composition of Claim 1 or 2 above and according to the process for treatment of Claim 3, wherein metal Bi and oxidized Bi are deposited as Bi at 20 to 250 mg/m , with a total film thickness being from 5 to 40 $\mu$m and a distribution of Bi deposition being such that B, that is, an amount of deposited Bi from the center of a film thickness to the side of a metallic material is 55% or more based on A, that is, a total amount of deposited Bi (B/A $\geq$ 55%).

[Fig. 1 ]

Fig. 1 Electrolysis pattern

[Fig. 2 ]

Fig. 2 EPMA line analysis profile of film in Example 4

[Fig. 3 ]

Fig. 3

<div align="center">**INTERNATIONAL SEARCH REPORT**</div>

| | International application No. |
|---|---|
| | PCT/JP2010/000965 |

**A. CLASSIFICATION OF SUBJECT MATTER**
*C25D13/10*(2006.01)i, *C25D13/00*(2006.01)i, *C25D13/18*(2006.01)i

According to International Patent Classification (IPC) or to both national classification and IPC

**B. FIELDS SEARCHED**

Minimum documentation searched (classification system followed by classification symbols)
C25D13/10, C25D13/00, C25D13/18

Documentation searched other than minimum documentation to the extent that such documents are included in the fields searched
Jitsuyo Shinan Koho          1922-1996          Jitsuyo Shinan Toroku Koho          1996-2010
Kokai Jitsuyo Shinan Koho    1971-2010          Toroku Jitsuyo Shinan Koho          1994-2010

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2008-274392 A  (Kansai Paint Co., Ltd.), 13 November 2008 (13.11.2008), claims; paragraphs [0011] to [0136] & US 2008/0254283 A1    & EP 1884579 A1 & CN 101144174 A | 1-4 |
| Y | JP 2008-088551 A  (Nippon Paint Co., Ltd.), 17 April 2008 (17.04.2008), claims; paragraphs [0023] to [0041] (Family: none) | 1-4 |

☐ Further documents are listed in the continuation of Box C.          ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 25 March, 2010 (25.03.10) | 06 April, 2010 (06.04.10) |

| Name and mailing address of the ISA/<br>Japanese Patent Office | Authorized officer |
|---|---|
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5032919 A
- WO 9931187 A
- JP 2004137367 A
- JP 2007197688 A
- JP 11080621 A
- JP 11080622 A
- JP 11100533 A
- JP 11106687 A
- JP 2008274292 A
- JP 2008538383 A
- JP 2008274392 A